# EUROPÄISCHE PATENTSCHRIFT

(11) **EP 4 646 350 B1**
(45) Veröffentlichungstag und Bekanntmachung des Hinweises auf die Patenterteilung: **29.04.2026**
(21) Anmeldenummer: 24710686.7
(22) Anmeldetag: 06.03.2024
(51) Int. Cl.: B60R 16/023

(54) **BORDNETZ FÜR EIN KRAFTFAHRZEUG**
MOTOR VEHICLE ONBOARD ELECTRICAL SYSTEM
SYSTÈME ÉLECTRIQUE EMBARQUÉ DE VÉHICULE AUTOMOBILE

(30) Priorität: 08.03.2023 DE 102023202078
(43) Veröffentlichungstag der Anmeldung: 12.11.2025
(73) Patentinhaber: LEONI Bordnetz-Systeme GmbH, 97318 Kitzingen (DE)
(72) Erfinder: HOFFMANN, Volker, 97318 Kitzingen (DE); HOLZMANN, Frédéric, 97084 Würzburg (DE); ÖCHSNER, Joachim, 97234 Reichenberg (DE)
(74) Vertreter: FDST Patentanwälte
(86) Internationale Anmeldenummer: PCT/EP2024/055921
(87) Internationale Veröffentlichungsnummer: WO 2024/184429

(56) Entgegenhaltungen:
- EP-B1- 3 866 405
- DE-A1- 102021 202 496
- US-A1- 2004 227 402
- US-A1- 2005 066 062
- US-A1- 2014 368 032

## Beschreibung

Die Erfindung betrifft ein Bordnetz für ein Fahrzeug, welches in einzelne Zonen unterteilt ist. Bordnetze mit einer zonalen Struktur sind beispielsweise aus der DE 100 23 088 B4, DE 10 2016 212 065 A1 oder der EP 3 192 704 A1 zu entnehmen.

Die Energie- und Signalverteilung in einem Bordnetz wird bei Bordnetzen mit zonaler Struktur üblicherweise hauptsächlich mit drei bis vier so genannten zonalen Steuergeräten realisiert, die hauptsächlich für die Karosserie- und Komfortfunktionen zuständig sind. Diese zonalen Steuergeräte befinden sich in entsprechenden Bereichen im Fahrzeug, die beispielsweise die vier Ecken des Fahrzeugs repräsentieren und üblicherweise den trockenen und nassen Bereich des Fahrzeugs voneinander trennen. Ein jedes dieser Zonensteuergeräte ist dabei typischerweise mit einem zentralen Steuergerät verbunden, welches die übergeordnete Steuerung der Kraftfahrzeug-Funktionalitäten durchführt. Derartige zentrale Steuergeräte werden auch als HPC (High Performant Controller) bezeichnet. Das Hauptziel dieser zonalen Steuergeräte, nämlich Kabelbaumstrukturen relevant zu vereinfachen, konnte nicht erreicht werden. Der angestrebte Kostensenkungseffekt wurde ebenfalls nicht erreicht, da sehr teure und komplexe dezentrale Steuergeräte benötigt werden und zudem ähnliche Anpassungen wie bei herkömmlichen, nicht zonalen Kabelbäumen notwendig sind. Um den angestrebten höheren Modularisierungsgrad für vereinfachte Montage zu erreichen, sind viele sogenannte Inline-Steckverbinder erforderlich, um Unterbaugruppen und damit Teil-Kabelsätze von einem Haupt-Kabelbaum zu trennen. Dies führt ebenso zu einer nicht gewünschten Kostensteigerung.

Aus EP 3 866 405 B1 ist ein Kommunikationssystem bei einem Kraftfahrzeug zu entnehmen, bei dem das Fahrzeug in mehrere Zonen aufgeteilt ist, die unabhängig voneinander ausgebildet sind.

Auch US 2004/227402 A1 beschreibt ein in Zonen unterteiltes Bordnetz, bei dem für die verschiedenen Zonen Kontroller vorgesehen sind.

DE 10 2021 202496 A1 zeigt ein Verteilungssystem für ein Bordnetz, welches eine zonale Bordnetzstruktur aufweist.

US 2014/368032 A1 beschreibt eine Netzwerk-Infrastruktur speziell für ein elektrisches Übertragungsnetzwerk.

US 2005/066062 A1 beschreibt ein Bussystem eines Netzwerkes, wobei eine der Buskomponenten einen Zeitmaster bildet.

Ausgehend hiervon liegt der Erfindung die Aufgabe zugrunde, ein Bordnetz anzugeben, welches flexibel im Hinblick auf unterschiedlichste Anforderungen ist.

Die Aufgabe wird gemäß der Erfindung gelöst durch ein Bordnetz für ein Kraftfahrzeug, welches im eingebauten Zustand Teil des Kraftfahrzeugs ist, wobei:
- Das Bordnetz eine Vielzahl von Bordnetz- Teilzonen aufweist. Bei diesen Bordnetz-Teilzonen handelt es sich um Teilbereiche des Bordnetzes, welche durch Montage-Baugruppen bei der Fahrzeugendmontage und deren Vormontage definiert sind (beispielsweise Frontendvormontage, Heckendvormontage, Türvormontagen mit ein oder mehreren Verlegebereichen, Cockpitbaugruppenvormontage, Sitzvormontage, ggf. weitere fahrzeugspezifische Vormontagen). Bei den Baugruppen handelt es sich also um vormontierte Baugruppen wie zum Beispiel Stoßfänger vorn, Stoßfänger hinten, Türbaugruppe mit ein oder mehreren Türmodulen, Cockpit- oder Armaturenbaugruppe, Heckbaugruppe, Sitzgruppe. Eine jede dieser Baugruppen weist - neben einem (mechanischen) Fahrzeugmodul einen Teil-Kabelsatz sowie elektrische Komponenten auf, die über den Teil-Kabelsatz angeschlossen sind.
- Jede Bordnetz-Teilzone weist mehrere dieser elektrischer Komponenten auf. Bei diesen handelt es sich insbesondere um Aktuatoren (Stellmotoren, Ventile, Heizelemente, Beleuchtungselemente), Sensoren (Temperaturfühler, Taster, Schalter, Ultraschallsensoren) und / oder Baugruppen-spezifische Funktionssteuergeräte (Rückhaltesysteme, Infotainment, diverse Funktionssteuergeräte). Diese elektrischen Komponenten sind über den erwähnten Teil-Kabelsatz und damit über und deren elektrische Verbindungsleitungen angeschlossen. Bei diesen elektrischen Komponenten handelt es sich daher allgemein um Baugruppen-spezifische oder auch Bauraum-spezifische elektrische Komponenten.
- Jede Bordnetz-Teilzone weist einen Teil-Kabelsatz mit Anschlussleitungen auf, über die die elektrischen Komponenten angeschlossen sind, nämlich zumindest eine, insbesondere abgesicherte Strom-Anschlussleitung zur elektrischen Leistungsversorgung sowie zumindest eine Daten-Anschlussleitung zur Datenübertragung.
- Einer jeden Teilzone ist (jeweils) eine elektronische, dezentrale Steuereinheit zugeordnet, die vorliegend auch als nano zonaler Controller (nZC) bezeichnet ist. Diese dezentrale Steuereinheit definiert eine Schnittstelle zwischen einem Versorgungsstrang des Bordnetzes und der Bordnetz-Teilzone. Über diese dezentrale Steuereinheit erfolgt die elektrische Leistungsversorgung als auch die Datenversorgung der elektrischen Komponenten. Die jeweilige Steuereinheit ist hierzu einerseits an dem Teil-Kabelsatz der Teilzone und andererseits am Versorgungsstrang angeschlossen. Sie ist bevorzugt in einem vorkonfigurierten Zustand zunächst mit dem Versorgungsstrang verbunden, oder alternativ mit dem Teil-Kabelsatz. Sofern vorliegend von einer Schnittstelle gesprochen wird, so wird hierunter sowohl eine mechanische als auch eine elektrische Schnittstelle verstanden. Über die dezentrale Steuereinheit ist daher die Bordnetz-Teilzone mit ihren elektrischen Komponenten und dem Teil-Kabelsatz an dem Versorgungsstrang mechanisch, elektrisch und datentechnisch angeschlossen. Der Anschluss des Teil-Kabelsatzes erfolgt dabei bevorzugt über Steckverbinder.

Die individuelle dezentrale Steuereinheit und / oder die mehreren dezentralen Steuereinheiten weisen dabei folgende Merkmale auf, bzw. sind zur Durchführung folgender Schritte ausgebildet:
∘ Eine jede dezentrale Steuereinheit ist an dem erwähnten Versorgungsstrang angeschlossen, welcher zumindest eine Stromleitung für die elektrische Leistungsversorgung sowie zumindest eine Datenleitung für die Datenübertragung aufweist. Der Versorgungsstrang bildet daher insgesamt einen zentralen Versorgungsstrang beispielsweise nach Art eines Backbones aus, über den die dezentralen Steuereinheiten insbesondere mit zentralen Einheiten verbunden sind, insbesondere mit einer zentrale Hauptversorgungseinheit, speziell eine Haupt-Sicherungsbox sowie mit einer zentralen Steuereinheit, insbesondere ein sogenannter High Performant Controller (HPC).
∘ Die dezentralen Steuereinheiten weisen jeweils eine Recheneinheit, also eine lokale Intelligenz auf, welche zur Durchführung von folgenden Schritten ausgebildet ist:
   ▪ Kommunikation, speziell eine drahtgebundene Kommunikation über die Daten-Anschlussleitungen mit den elektrischen Komponenten mit Hilfe eines (ersten) Datenbusses mittels eines (ersten) Datenprotokolls. Hierbei handelt es sich insbesondere um einen herkömmlichen Standard-Bus wie beispielsweise Ethernet, CAN, LIN, PSI5, SENT. Durch die Verwendung eines herkömmlichen Standard-Datenbusses lassen sich die elektrischen Komponenten einfach ansteuern und integrieren.
   ▪ Für die Kommunikation der dezentralen Steuereinheiten untereinander wird bevorzugt ein zweiter Datenbus mit einem zweiten Datenprotokoll verwendet. Hierbei handelt es sich bevorzugt, jedoch nicht zwingend um einen zum ersten Datenbus verschiedenen Datenbus insbesondere mit einem unterschiedlichen Datenprotokoll. Für die Kommunikation der Steuereinheiten untereinander kann daher ein spezielles, proprietäres Kommunikationssystem eingesetzt werden, welches unabhängig von den im Bordnetz weiterhin verwendeten Standard-Datenbussen ist.
   ▪ Kommunikation mit der bereits erwähnten zentralen Steuereinheit über den Versorgungsstrang. Über diese zentrale Steuereinheit werden allgemein die elektrischen Komponenten der verschiedenen Bordnetz-Teilzonen entweder durch direkte Steuerbefehle angesteuert oder zumindest funktional ertüchtigt. Hierunter wird verstanden, dass dezentrale Steuereinheiten verteilt im gesamten Fahrzeug und vorrangig in den Montagemodulen sämtliche Funktionsbefehle von der zentralen Steuereinheit erhalten und diese lokal ausführen. Dafür weisen die dezentralen Steuereinheiten bevorzugt eine Gateway-Funktion auf, die lokal in der jeweiligen Teilzone benötigte Bus-Funktionen ausbildet. Ebenso werden durch die dezentralen Steuereinheiten lokale Sensordaten erfasst und über den Datenbus der zentralen Steuereinheit zur Verfügung gestellt. Des Weiteren werden durch die dezentralen Steuereinheiten lokale Diagnosefunktionen über den Zustand der Aktuatoren und Sensoren innerhalb einer Teilzone zur Verfügung gestellt.
   ▪ elektrische, insbesondere elektronische Absicherung der Anschlussleitungen der angeschlossenen Bordnetz-Teilzone gegen Überlast und / oder Kurzschluss. In der jeweiligen dezentralen Steuereinheit sind vorzugsweise Sicherungselemente oder zumindest (elektronische) Schaltelemente angeordnet, die zur Absicherung bzw. Abschalten eines jeweiligen abgehenden Strom-Pfades zu einer jeweiligen elektrischen Komponente ausgebildet sind. Bevorzugt handelt es sich bei den Sicherungselementen insbesondere ausschließlich um elektronische und damit typischerweise reversible Sicherungselemente und es werden keine Hardware-Sicherungskomponenten, wie beispielsweise
      Schmelzsicherungen eingesetzt, bei denen es sich üblicherweise um nichtreversible Sicherungskomponenten handelt.
      Alternativ zu der Integration von Sicherungselementen in die dezentrale Steuereinheit sind lediglich (elektronische) Schaltelemente integriert, die bei Bedarf beispielsweise von der integrierten Recheneinheit der dezentralen Steuereinheit angesteuert werden, um z.B. eine Unterbrechung des jeweils angeschlossenen Strompfades zu erreichen.
      Bei den hier beschriebenen dezentralen Steuereinheiten handelt es sich insgesamt um sehr klein bauende Steuereinheiten mit jeweils eigenem Gehäuse. Durch die Verwendung von elektronischen Sicherungs- oder Schaltelementen ist der erforderliche Bauraum geringgehalten.

Die dezentralen Steuereinheiten bilden allgemein ein Kommunikationsnetz für eine Kommunikation untereinander sowie mit der zentralen Steuereinheit aus.

Weiterhin ist die zentrale Steuereinheit als Zeitmaster zur Vorgabe eines Zeitsignals (Zeitstempel) ausgebildet, wobei im Falle eines Fehlens oder Ausfalls der zentralen Steuereinheit eine der dezentralen Steuereinheiten automatisch die Funktion des Zeitmasters übernimmt und damit den neuen Zeitmaster bildet. Über den Zeitmaster wird allgemein eine Zeitbasis vorgegeben, auf die sich die verschiedenen Teilnehmer des Kommunikationsnetzes jeweils synchronisieren.

Der besondere Vorteil ist darin zu sehen, dass insbesondere jede der dezentralen Steuereinheiten dafür eingerichtet ist, die Funktion des Zeitmasters insbesondere temporär zu übernehmen, speziell bis diese Funktion (wieder) von der zentralen Steuereinheit übernommen wird.

Bei Ausfall der zentralen Steuereinheit oder bei (noch) fehlender zentraler Steuereinheit z.B. bei einer Erstkonfiguration, übernimmt daher eine dezentrale Steuereinheit die Zeitmasterfunktion, d.h. sie gibt sich für alle anderen (Bus-) Teilnehmer und speziell für später zugeschaltete Teilnehmer in der Bordnetz-Teilzone als Zeitmaster zu erkennen. Und zwar solange, bis sich die (dominante) zentrale Steuereinheit (wieder) zugeschaltet hat.

Ein Vorteil ist darin zu sehen, dass im Fehlerfall in einer Bordnetz-Teilzone oder bei Ausfall der zentralen Steuereinheit es nicht zu einem Ausfall beispielsweise des gesamten Systems kommt, da eine der dezentralen Steuereinheiten für die Bordnetz-Teilzone als Zeitmaster fungiert und dadurch den Betrieb aufrecht erhält, insbesondere einen Notbetrieb mit eingeschränktem Funktionsumfang mit z.B. definierten Notlaufroutinen aufrecht erhält.

Ein weiterer Vorteil ist darin zu sehen, dass z.B. bereits im Rahmen von Vorbaugruppen, speziell im Rahmen einer Bordnetz-Teilzone eine Konfiguration der verschiedenen Teilnehmer erfolgen kann. Dies ist bisher üblicherweise erst möglich, wenn die zentrale Steuereinheit als Netzteilnehmer erkannt ist und als Zeitmaster die Kommunikation der weiteren Teilnehmer erst initiiert. Diese Initiierung der Kommunikation kann nunmehr bereits auf Ebene einer solchen Vorbaugruppe durch eine der dezentralen Steuereinheit erfolgen..

Zweckdienlicherweise ist daher auch vorgesehen, dass das Bordnetz für eine sequentielle Montage der Bordnetz-Teilzonen ausgebildet ist. Die Bordnetz-Teilzonen insbesondere zusammen mit den angeschlossenen elektrischen Komponenten bilden insofern die zuvor erwähnte Vormontage-Baugruppen mit zumindest jeweils einer dezentralen Steuereinheit aus. Die dezentralen Steuereinheiten sind weiterhin dafür ausgelegt, bereits bei der sequentiellen Montage auch ohne die zentrale Steuereinheit miteinander zu kommunizieren, insbesondere derart, dass bereits im Laufe der sequentiellen Montage die einzelnen Teilnehmer des Kommunikationsnetzes sich sukzessive konfigurieren. Sie treten daher mit den anderen bereits installierten Teilnehmern in Kommunikation. Dies verbessert und beschleunigt die Fahrzeugmontage. Ein wichtiger Gesichtspunkt hierbei ist, dass automatisch eine der dezentralen Steuereinheiten als Zeitmaster ausgewählt wird, bzw. sich als Zeitmaster zu erkennen gibt. Sobald die zentrale Steuereinheit eingebunden wird, übernimmt diese die Zeitmaster-Funktion und die anderen Netzteilnehmer synchronisieren sich dann auf die von dieser vorgegebenen Zeitbasis.

In bevorzugter Ausgestaltung bilden ist zumindest ein Teil der dezentralen Steuereinheiten und sind vorzugsweise alle dezentralen Steuereinheiten über redundante Pfade mit weiteren dezentralen Steuereinheiten verbunden. Der redundante Pfad betrifft sowohl die Stromleitung als auch die Datenleitung. Bei Unterbrechung eines Pfades ist daher die dezentrale Steuereinheit über den redundanten Pfad weiterhin zuverlässig eingebunden.

Ein Vorteil eines derartigen redundanten Aufbaus besteht allgemein unter anderem auch darin, dass mehrere alternative (dynamische) Datenpfade sowie Versorgungspfade bestehen, was u.A. für eine Ausfallsicherheit von Vorteil ist. Durch geschickt angeordnete redundante Daten- sowie Versorgungspfade kann mit sehr geringem Aufwand ein hohes Maß an Redundanz sichergestellt werden. Herkömmliche zonale Strukturen sind üblicherweise sternförmig und beispielsweise ausgehend von einer zentralen Steuereinheit aufgebaut. Durch die Ausbildung mit den insbesondere über redundante Pfade miteinander verbundenen dezentralen Steuereinheiten ist die Verteilstruktur im Vergleich zu einer sternförmigen Struktur deutlich vereinfacht und es werden insbesondere parallele Verlegewege zu einem sternförmigen, zentralen Verteilerpunkt vermieden.

Auf eine solche sternförmige Struktur ist daher vorliegend insbesondere verzichtet. Die dezentralen Steuereinheiten sind daher nicht alle über eine eigene Verbindungsleitung an ein bzw. an die zentrale Steuereinheit angeschlossen. Vielmehr sind zumindest die meisten der dezentralen Steuereinheiten lediglich mittelbar mit einer zentralen Einheit, insbesondere mit der zentralen Steuereinheit beispielsweise über Knotenpunkte verbunden. Bei den Knotenpunkten handelt es sich jeweils um eine der dezentralen Steuereinheiten. Die dezentralen Steuereinheiten bilden beispielsweise eine vermaschte Struktur und damit ein vermaschtes Netzwerk aus.

Der besondere Vorteil eines derartigen Bordnetzes ist durch die Verwendung der speziellen dezentralen Steuereinheiten und durch deren bevorzugte Integration in das Kommunikations-Netzwerk darin zu sehen, dass der Aufbau des gesamten Bordnetzes dadurch deutlich vereinfacht werden kann. Im Vergleich zu den eingangs beschriebenen, bisherigen zonalen Strukturen mit den beispielsweise lediglich 3-4 zonalen Steuergeräten entfällt beispielsweise die Notwendigkeit von zusätzlichen Teil-Kabelsätzen und die Notwendigkeit von zusätzlichen individuellen Inline-Steckverbindern. Insgesamt ist hierdurch die Montage, Aufbau und Struktur des Bordnetzes vereinfacht. Hervorzuheben ist weiterhin die vermaschte-Netzstruktur, da speziell hierdurch eine automatische Selbstorganisation der einzelnen Teilnehmer ermöglicht ist, wodurch eine Nachrüstbarkeit vereinfacht und insbesondere auch die Ausfallsicherheit verbessert ist.

Bevorzugte Weiterbildungen und weitere Vorteile ergeben sich auf Basis der Unteransprüche.

Gemäß einer bevorzugten Weiterbildung sind die Steuereinheiten derart ausgebildet, dass eine neue Steuereinheit automatisch erkannt wird und in das Kommunikations-Netzwerk integriert wird. Hierzu wird bevorzugt eine beispielsweise in einer sogenannten Routing-Tabelle abgelegte Routeninformation automatisch angepasst.

Durch diese Maßnahme wird der besondere Vorteil erzielt, dass das Bordnetz funktional ohne Probleme um weitere Bordnetz-Teilzonen und/oder neue Funktionalitäten erweitert werden kann, ohne dass damit eine (aufwändige) zonenübergreifende Installation oder Einbindung erforderlich ist. Es besteht insbesondere die Möglichkeit, dass im Reparatur- oder Nachrüstfall eine Ersatzkomponente oder auch eine Zusatzkomponente (function on demand) nachgerüstet werden kann, ohne dabei das gesamte Netzwerk neu konfigurieren zu müssen. Hierdurch wird also insgesamt eine Installation nach dem Prinzip "plug and play" ermöglicht.

Bevorzugt ist weiterhin für die Kombination der Steuereinheiten untereinander ein sogenanntes dynamisches Routen vorgesehen, so dass Kommunikationspfade automatisch an veränderte Umstände angepasst werden. Das dynamische Routen wird auch als ein adaptives Routen bezeichnet. Der besondere Vorteil hierbei ist darin zu sehen, dass ein Kommunikationspfad und auch ein Versorgungspfad für die elektrische Leistungsversorgung auch in einem Schadensfall, wenn beispielsweise ein Teilbereich des Bordnetzes ausfällt, automatisch durch das dynamische Routen über einen neuen (redundanten) Kommunikations- und Versorgungspfad kompensiert werden kann und wird. Dadurch wird die Ausfallsicherheit und Zuverlässigkeit des Bordnetzes verbessert. Ebenso kann das allgemeine elektrische Powermanagement des Fahrzeuges durch Lastabwurf von Einzelsträngen beispielsweise im Rahmen einer definierten Klemmensteuerung ohne Zusatzaufwand unterstützt werden.

In bevorzugter Ausgestaltung ist der zweite Datenbus für die Kommunikation der Steuereinheiten untereinander verschieden zum ersten Datenbus. Insbesondere ist ein zweites Datenprotokoll des zweiten Datenbusses verschieden zu dem Datenprotokoll des ersten Datenbusses. Beim zweiten Datenbus handelt es sich insbesondere um einen proprietären Datenbus. Durch die Verwendung von unterschiedlich ausgestalteten Datenbussen kann herstellerseitig (auf Seite des Herstellers des Bordnetzes) eine zuverlässige Kommunikation der Steuereinheiten nach gewünschten Kriterien und Anforderungen eingerichtet werden. Gleichzeitig ist durch die Verwendung von Standard-Datenbussen für die Kommunikation mit den elektrischen Komponenten in den Bordnetz Teilzonen oder auch für die Kommunikation mit dem zumindest einen zentralen Steuergerät oder der zumindest einen zentralen Energie-Versorgungseinheit ein standardisierter und zuverlässiger Datenaustausch sichergestellt. Bevorzugt wird über diesen zweiten Datenbus daher quasi ein gesondertes Netzwerk der Steuereinheiten untereinander aufgebaut, was auch als ein "privat network" bezeichnet wird. Dieses nutzt bevorzugt herkömmlich bekannte Standardprotokolle.

Die Kommunikation mit den restlichen Komponenten und der restlichen Infrastruktur des Fahrzeuges (beispielsweise Bordnetz-Teilzonen sowie auch mit den zentralen Einheiten) erfolgt dabei vorzugsweise über eine geeignete Schnittstelle, auch als Gateway bezeichnet.

Diese Schnittstelle ist insbesondere in einer jeweiligen dezentrale Steuereinheit integriert. Sie ist dabei für die wechselseitige Kommunikation und ggf. Umwandlung der Datenprotokolle der unterschiedlichen Datenbusse für eine bidirektionale Kommunikation von und zu den elektrischen Komponenten und / oder den zentralen Einheiten ausgebildet.

Durch diese Maßnahme wird insgesamt eine zuverlässige und sichere Kommunikation innerhalb des gesamten Bordnetzes gewährleistet. Da die unterschiedlichen Teilzonen teilweise auch eigene proprietäre Netze ausbilden ist durch diese Maßnahme eine Einbindung in das gemeinsame Bordnetz, welches als ein Hochleistungsnetzwerk ausgebildet ist, ermöglicht und gewährleistet.

Für die Kommunikation wird dabei eine vordefinierte Latenzzeit bestimmt und eingehalten, sodass die Summe aller Latenzzeiten den Anforderungen der durch die verschiedenen Bordnetz-Teilzonen gebildeten Einzelsysteme erfüllen.

In bevorzugter Ausgestaltung handelt es sich bei der jeweiligen dezentralen Steuereinheit jeweils um die einzige, insbesondere standardisierte Schnittstelle zu den elektrischen Komponenten der jeweiligen Bordnetz-Teilzone. Unter einzige Schnittstelle wird dabei verstanden, dass die Komponenten der jeweiligen Bordnetz-Teilzone ausschließlich über die dezentrale Steuereinheit mit dem übrigen Bordnetz verbunden sind. Die Strom-Anschlussleitungen bzw. die Daten-Anschlussleitungen des Teil-Kabelsatzes der jeweiligen Teilzone sind hierbei über ein oder mehrere elektromechanische Schnittstellen, insbesondere Steckverbinder, an der dezentralen Steuereinheit angeschlossen.

Da eine jeweilige Teilzone durch eine definierte Montagebaugruppe gebildet ist, bedeutet dies, dass eine jeweilige Montagebaugruppe lediglich durch diese einzige Schnittstelle verbunden ist. Es gibt daher keine weiteren Datenleitungen oder Stromleitungen zu den einzelnen Komponenten. Hierdurch wird insgesamt der Montageaufwand deutlich erleichtert, da bei der Montage einer vormontierten Baugruppe lediglich die Anbindung über die jeweilige dezentrale Steuereinheit für diese jeweilige Bordnetz-Teilzone erforderlich ist. So erfolgt beispielsweise die Datenkommunikation sowie die Leistungsversorgung eines Türmoduls oder einer sonstigen der oben erwähnten Baugruppen vollständig und ausschließlich über eine jeweilige dezentrale Steuereinheit. Speziell in Verbindung mit der Selbstorganisation über das Kommunikations-Netzwerk ist hierdurch insgesamt ein einfacher, montagefreundlicher Aufbau des gesamten Bordnetzes mit einfachen Erweiterungsmöglichkeiten und geringen Montageanforderungen erreicht.

Zum Anschluss an den Versorgungsstrang weisen die dezentralen Steuereinheiten ebenfalls eine geeignete Schnittstelle auf. Auch hier sind die zumindest eine Stromleitung sowie die zumindest eine Datenleitung des Versorgungsstrangs über ein oder mehrere elektromechanische Schnittstellen, z.B. Schraubanschlüsse und / oder Steckanschlüsse über Kontaktstecker an die dezentrale Steuereinheit angeschlossen.

In einer bevorzugte Ausgestaltung weisen zumindest einige und vorzugsweise alle der dezentralen Steuereinheiten eine gemeinsame, standardisierte elektromechanische Anschluss-Schnittstelle auf, die insbesondere als Kontaktstecker ausgebildet ist. Über diese gemeinsame, also einheitliche Anschluss-Schnittstelle, ist der Versorgungsstrang angeschlossen. Es sind also sowohl die zumindest eine Stromleitung als auch die zumindest eine Datenleitung über die gemeinsame Anschluss-Schnittstelle, also insbesondere über einen gemeinsamen Kontaktstecker angeschlossen. Für jedes der Teilnetze wird hierbei die gleiche Standard-Anschluss-Schnittstelle verwendet. Unterschiede bestehen allenfalls in den Leiter-Querschnitten.

Vorzugsweise sind weiterhin an zumindest einer der dezentralen Steuereinheiten mehrere Sub-Teilkabelsätze angeschlossen, wobei die Sub-Teilkabelsätze untereinander nicht verbunden sind und räumlich in unterschiedlichen Sub-Teilzonen verlegt sind. Jeder der Sub-Teilkabelsätze weist - wie auch ein jeweiliger Teil-Kabelsatz - Anschlussleitungen (Strom-Anschlussleitungen sowie Daten-Anschlussleitungen) auf, über die mehrere elektrische Komponenten angeschlossen sind. An der dezentralen Steuereinheit sind daher Schnittstellen, insbesondere Kontaktstecker für diese Sub-Teilkabelsätze vorhanden.

Die Sub-Teilkabelsätze versorgen dabei räumlich unterschiedliche Bereiche, beispielsweise einen vorderen Stoßfänger sowie einen daran in Richtung zur Fahrgastzelle anschließenden Teilbereich. Ein jeder der Sub-Teilkabelsätze weist beispielsweise einen gemeinsamen Leitungsstrang mit mehreren Anschlussleitungen auf, mit dem er an der dezentralen Steuereinheit angeschlossen ist, und von dem einzelne Anschlussleitungen abzweigen und zu den angeschlossenen elektrischen Komponenten führen.

In zweckdienlicher Weiterbildung sind im Bordnetz zumindest ein zentraler Leistungsverteiler, beispielsweise eine sogenannte (elektronische) (Haupt-) Sicherungsbox, auch als Power Distribution Box bezeichnet, sowie zumindest eine zentrale Steuereinheit, insbesondere ein sogenannter High Performant Controller (HPC) angeordnet, mit denen der Versorgungsstrang verbunden ist, an den wiederum die einzelnen dezentralen Steuereinheiten angeschlossen sind. Über diese zentralen Einheiten wird daher die Leistungsversorgung der einzelnen Bordnetz-Teilzone sowie deren Ansteuerung über den Versorgungsstrang ermöglicht.

Gemäß einer vorteilhaften Ausgestaltung ist die zentrale Steuereinheit selbst in einer Teilzone angeordnet und ist über die dieser Teilzone zugeordneten dezentralen Steuereinheit an den Versorgungsstrang angeschlossen. Hierdurch wird insgesamt eine einfache Bordnetz-Architektur erreicht, bei der eben auch zentrale Einheiten jeweils Teil einer Teilzone sind, sodass sich auch zentrale Einheiten ohne weiteres in die Netzwerkstruktur einbinden lassen.

Alternativ hierzu ist die zentrale Steuereinheit direkt und damit nicht mittelbar über eine dezentrale Steuereinheit in die Netzwerkstruktur eingebunden und direkt an den Versorgungsstrang angeschlossen.

Weiterhin bildet die zentrale Steuereinheit beispielsweise zugleich auch eine dezentrale Steuereinheit aus, d.h. sie bildet eine Schnittstelle zu zumindest einer der Bordnetz-Teilzonen aus, also z.B. zu einer Vormontage-Baugruppe.

In bevorzugter Weiterbildung werden die zumindest eine Stromleitung und/oder die zumindest eine Datenleitung des Versorgungsstrangs durch zumindest einige der dezentralen Steuereinheiten durchgeschleift. Zumindest einige und vorzugsweise sämtliche dezentralen Steuereinheiten weisen hierzu jeweils einen Eingangs-Anschluss sowie einen Ausgangs-Anschluss für die Stromleitung und/oder Datenleitung auf. Durch dieses Durchschleifen ist der Verdrahtungsaufwand insgesamt gering gehalten und es sind beispielsweise nicht parallel mehrere Pfade und Versorgungsstränge erforderlich.

Bevorzugt weisen zumindest einige und vorzugsweise alle der dezentralen Steuereinheiten genau eine Anschluss-Schnittstelle zum Anschluss des Versorgungsstrangs auf, die bei Bedarf ergänzend als eine Durchschleif-Schnittstelle ausgebildet ist. Die eine Anschluss-Schnittstelle für den Versorgungsstrang weist dabei typischerweise eine erste Anschluss-Schnittstelle für den Anschluss der zumindest einen Stromleitung und eine zweite Anschluss-Schnittstelle für die zumindest eine Datenleitung des Versorgungsstrangs auf. Da nur genau eine Anschluss-Schnittstelle vorhanden ist, ggf. mit Durchschleif-Funktion, sind die dezentralen Steuereinheiten nur mit genau einem Versorgungsstrang verbunden. Eine jeweilige dezentrale Steuereinheit weist daher nicht mehrere Anschluss-Schnittstellen für mehrere eingehende / abgehende Versorgungsstränge auf. Eine jeweilige dezentrale Steuereinheit bildet daher auch insbesondere keinen Knotenpunkt aus, von dem etwa sternförmig mehrere Anschlussleitungen abgehen und z.B. drei oder mehr weitere Steuereinheiten angeschlossen sind. Die dezentrale Steuereinheit ist daher maximal mit zwei weiteren dezentralen Steuereinheiten verbunden.

Gemäß einer Weiterbildung sind zumindest einige der dezentralen Steuereinheiten nur mit maximal einer weiteren dezentralen Steuereinheit verbunden, d.h. diese bilden quasi dezentrale End-Steuereinheiten aus, bei denen ein Durchschleifen nicht erfolgt.

Bei der Datenleitung handelt es sich vorzugsweise um genau eine Datenleitung, insbesondere eine zweiadrige Datenleitung. Alternativ kann es sich auch um eine koaxiale Datenleitung handeln. Über diese genau eine Datenleitung erfolgt also die Kommunikation und Ansteuerung sämtlicher elektrischer Komponenten. Hierzu ist typischerweise eine geeignete Adressierung vorgesehen.

In bevorzugter Ausgestaltung weist der Versorgungsstrang genau eine Stromleitung auf, über die die elektrische Leistungsversorgung erfolgt. Diese eine Stromleitung weist dabei zumindest eine Leitungsader auf, die mit einem positiven Bezugspotential (plus-Potenzial) einer Versorgungsquelle, beispielsweise einer Batterie, insbesondere über den Leistungsverteilter verbunden ist. Je nach Ausgestaltung kann die genau eine Stromleitung dabei auch eine zweite Leitungsader für einen Masseanschluss aufweisen. Dies ist jedoch nicht zwingend erforderlich, da die notwendige Masseanbindung der einzelnen elektrischen Komponenten beispielsweise auch über eine Massekontaktierung mit einer Fahrzeugstruktur erfolgen kann, über die ein Rückpfad zu der Versorgungsquelle (Batterie) ermöglicht ist. Bei der Stromleitung handelt es sich daher um eine einadrige oder auch eine zweiadrige Versorgungsleitung. Von dieser zentralen Stromleitung des Versorgungsstrangs wird daher die jeweilige Leistungsversorgung für das Teil-Bordnetz abgezweigt. Die Verteilung auf die unterschiedlichen Strom-Anschlussleitungen erfolgt über die jeweilige dezentrale Steuereinheit. Eine jeweilige Strom-Anschlussleitung ist dabei vorzugsweise gegenüber Strom und/oder Kurzschluss abgesichert.

Die dezentralen Steuereinheiten bilden zusammen mit dem Versorgungsstrang in bevorzugter Ausgestaltung dabei eine kaskadierende Topologie oder auch eine backbone-basierende Topologie oder eine Misch-Topologie bestehend aus diesen beiden Topologie aus. Bei der kaskadierenden Topologie sind mehrere dezentrale Steuereinheit seriell angeordnet, wobei bevorzugt einer ersten dezentralen Steuereinheit ein Gruppe von weiteren dezentralen Steuereinheiten nachgeschaltet ist, wobei diese weiteren dezentralen Steuereinheiten parallel zueinander angeordnet sind.. Bei der Backbone-basierenden Topologie gehen von einem Hauptstrang des Versorgungsstrangs mehrere Abzweigsträngen ab, in denen eine Anzahl, also ein oder mehrere dezentrale Steuereinheiten insbesondere und vorzugsweise alle dieser weiteren dezentralen Steuereinheiten zueinander parallel angeordnet sind. Bei der Kombination aus beiden Topologien wird daher typischerweise durch zumindest einige dezentrale Steuereinheiten der Versorgungsstrang durchgeschleift.

In zweckdienlicher Ausgestaltung weist das Bordnetz insgesamt mehr als 7, vorzugsweise mehr als 10, weiter bevorzugt mehr als 15 oder auch mehr als 20 Teilzonen auf. Maximal werden beispielsweise 40 oder vorzugsweise lediglich 30 oder 20 Teilzonen ausgebildet. Die Anzahl der einzelnen Teilzonen variiert und ist beispielsweise fahrzeugklassenabhängig und/oder ausstattungsabhängig. Die Anzahl ist insbesondere auch davon abhängig, inwieweit der Aufbau des Fahrzeugs modularisiert ist.

Zweckdienlicherweise weist eine jeweilige Bordnetz-Teilzone mehr als 5, vorzugweise mehr als 10 oder auch mehr als 20 Komponenten auf. Beispielsweise liegt die Anzahl im Bereich zwischen 2-30 Komponenten und insbesondere im Bereich zwischen 5 -20 oder 10-20 elektrisch und datentechnisch zu verbindenden Komponenten.

Bevorzugt weisen die dezentrale Steuereinheiten jeweils ein Gehäuse auf, welches außenseitig mehrere Anschluss-Schnittstellen aufweist, die zum Anschluss an den Versorgungsstrang einerseits sowie an den Teil-Kabelsatz der Bordnetz-Teilzone andererseits dienen. Über diese Anschluss-Schnittstellen ist daher eine mechanische und elektrische Schnittstelle zum Versorgungsstrang einerseits und zu der Bordnetz-Teilzone andererseits erreicht. Für den Anschluss an den Teil-Kabelsatz der Bordnetz-Teilzone werden bevorzugt ausschließlich Steckverbinder herangezogen. Der Anschluss an den Versorgungsstrang erfolgt dabei - speziell für den Anschluss an die zumindest eine Datenleitung - bevorzugt ebenfalls über eine Steckverbindung. Der Anschluss der zumindest einen Stromleitung des Versorgungsstrangs an die dezentrale Steuereinheit erfolgt wahlweise über eine Steckverbindung oder alternativ auch über eine Schraubverbindung bei hohen Lastanforderungen. Alternativ sind andere Anschluss- und Kontaktierungstechnologien für den Anschluss an den Versorgungsstrang, z.B. eine Direktkontaktierung vorgesehen.

Bei den dezentralen Steuereinheiten handelt es sich insgesamt um vergleichsweise klein bauende Einheiten mit einem kleinen Formfaktor. Unter kleiner Formfaktor wird hierbei verstanden, dass das Gehäuse einen beispielsweise quaderförmigen Innenraum (also das Gehäuse ohne die außenseitig angeordneten Anschluss-Schnittstellen) von maximal 100 ccm und bevorzugt von maximal 90 ccm einschließt. Beispielsweise weist das Gehäuse - ohne die außenliegenden Anschluss-Schnittstellen - eine Länge von maximal 5 cm oder maximal 10 cm, eine Höhe von maximal 4 cm oder maximal 8 cm und eine Breite von maximal 4 cm oder maximal 8 cm auf.

In bevorzugter Ausgestaltung bilden die dezentralen Steuereinheiten zusammen mit dem Versorgungsstrang eine vorgefertigte Bordnetz-Stammbaugruppe, an der die individuellen Teil-Kabelsätze der verschiedenen Bordnetz-Teilzonen über die jeweiligen dezentralen Steuereinheiten angeschlossen sind. Bei der Herstellung des Bordnetzes wird daher in einem ersten Schritt von einem Hersteller des Bordnetzes diese Bordnetz- Stammbaugruppe bereitgestellt und beispielsweise an einen Montageort für die Endmontage des Kraftfahrzeugs geliefert. An diesem Montageort werden dann die einzelnen Teil-Kabelsätze auf die Vormontagebaugruppen montiert und gegebenenfalls mit den Steuereinheiten verbunden und können dann als komplette Baugruppe bereits vor dem Einbau in das Fahrzeug funktional geprüft werden. Bei der Endmontage des Kraftfahrzeugs werden somit die einzelnen Bordnetz-Teilzonen an das Fahrzeugbordnetz angeschlossen.

Zumindest einige und vorzugsweise alle Bordnetz-Teilzonen sind - wie bereits beschrieben - vorzugsweise jeweils Teil einer vorkonfektionierten Baugruppe, die ein mechanisches Fahrzeugmodul sowie die daran montierte Bordnetz-Teilzone mit den zugeordneten elektrischen Komponenten und dem zugeordneten Teil-Kabelsatz aufweist. Bei dem mechanischen Fahrzeugmodul handelt es sich beispielsweise um eine Türe, eine Heckklappe, einen Stoßfänger, ein Armaturenbrett, eine Sitzbaugruppe usw. Allgemein weist daher das mechanische Fahrzeugmodul neben den elektrischen Einheiten der jeweiligen Bordnetz-Teilzone auch weitere insbesondere mechanische Funktionselemente auf.

Ein Ausführungsbeispiel der Erfindung wird nachfolgend anhand der Figuren näher erläutert. Diese zeigen in teilweise stark vereinfachten Darstellungen:
- FIG 1: ein Bordnetz eines Fahrzeuges,
- FIG 2: eine dezentrale Steuereinheit als Schnittstelle zwischen einem Versorgungsstrang und einem Teil-Kabelsatz,
- FIG 3: eine Blockbild-Darstellung eines Teilbereichs des Bordnetzes,
- FIG 4: eine ausschnittsweise Darstellung einer Bordnetz-Stammbaugruppe mit einer kaskadierenden Topologie sowie
- FIG 5: eine ausschnittsweise Darstellung einer Bordnetz-Stammbaugruppe mit einer backbone-basierenden Topologie.

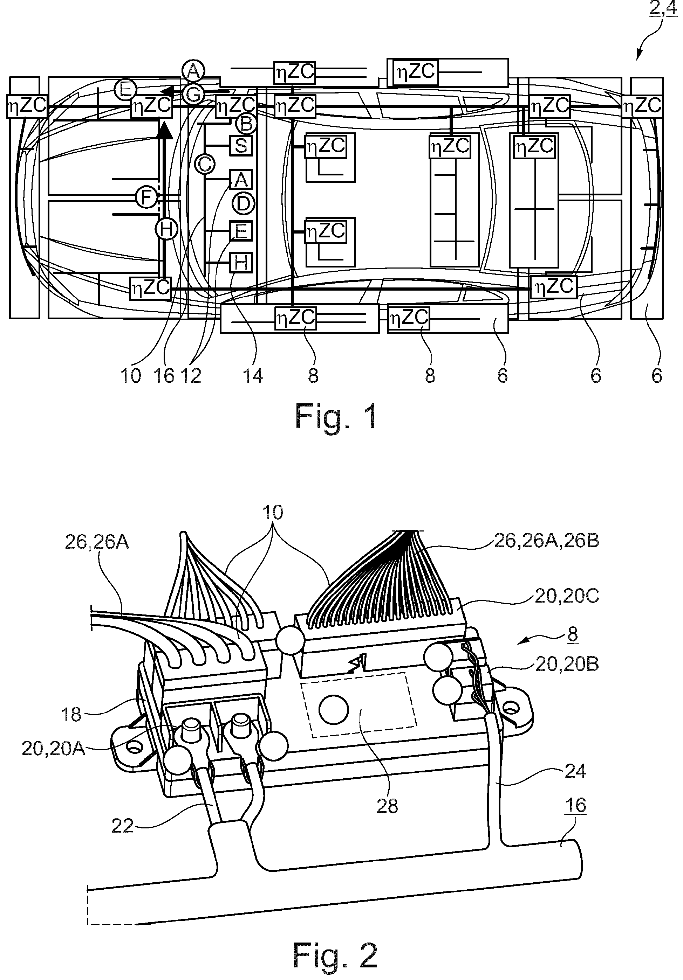

Bei dem in der FIG 1 dargestellten Fahrzeug 2 handelt es sich um ein Straßenfahrzeug, insbesondere einen Pkw. Dieser weist ein Bordnetz 4 auf, welches in eine Vielzahl an Bordnetz-Teilzonen 6 unterteilt ist. Im Ausführungsbeispiel sind insgesamt 15 Bordnetz-Teilzonen 6 dargestellt.

Jeder dieser einzelnen Bordnetz-Teilzonen 6 ist jeweils eine dezentrale Steuereinheit 8 zugeordnet, die in den Figuren auch als nZC (nano zonaler Controller) bezeichnet sind. An einer jeweiligen dezentralen Steuereinheit 8 ist jeweils ein Teil-Kabelsatz 10 angeschlossen, welcher Teil der Bordnetz-Teilzone 6 ist. Die Bordnetz-Teilzone 6 weist darüber hinaus jeweils mehrere elektrische Komponenten 12 auf, die in der einen dargestellten Bordnetz-Teilzone 6 jeweils als Kästchen mit den Buchstaben S, A, E, H dargestellt sind, wobei S für Sensor, A für Aktoren, E für ECU (Electronic Control Unit) und H für HPC (High Performant Controller) steht. Bei dieser HPC handelt es sich um eine zentrale Steuereinheit 14, die im Ausführungsbeispiel in einer der Bordnetz-Teilzonen 6 integriert ist. Bei dem in der Bordnetz-Teilzone 6 integrierten ECU-Steuergerät handelt es sich um ein funktionales Steuergerät für eine spezielle Baugruppe, beispielsweise eine Sitzbaugruppe und insbesondere für einen Airbag oder auch ein Steuergerät für eine Sitzverstellung. Derartige Baugruppen-spezifische Steuergeräte werden üblicherweise von einem Zulieferer/Hersteller einer solchen Baugruppe zusammen mit der Baugruppe bereitgestellt.

Eine jede dezentrale Steuereinheit 8 ist einerseits an dem jeweiligen Teil-Kabelsatz 10 angeschlossen, über die einzelne elektrische Komponenten 12 der jeweiligen Bordnetz-Teilzone 6 versorgt werden. Andererseits ist eine jeweilige dezentrale Steuereinheit 8 mit einem Versorgungsstrang 16 verbunden, welcher jeweils zur elektrischen Leistungsversorgung als auch zur Datenanbindung ausgebildet ist.

Eine jeweilige Bordnetz-Teilzone 6 weist üblicherweise eine Vielzahl von solchen elektrischen Komponenten 12 auf, beispielsweise zumindest 5 oder zumindest 10.

Die einzelnen dezentralen Steuereinheiten 8 bilden insgesamt ein Netzwerk aus und sind daher für eine geeignete Kommunikation untereinander ausgebildet.

Die in den Kreisen angegebenen Buchstaben A- H weisen darüber hinaus folgende Bedeutung auf:
- A:: Cockpit als Beispiel für eine Baugruppe und einer Bordnetz-Teilzone 6,
- B:: dezentrale Steuereinheit 8 in der Cockpit-Baugruppe,
- C:: Teil-Kabelsatz 10 innerhalb der Cockpit-Baugruppe,
- D:: die einzelnen elektrischen Komponenten 12 (S, A, E, H) der Cockpit-Baugruppe wie zuvor erläutert,
- E:: weitere dezentrale Steuereinheit 8 einer weiteren Bordnetz-Teilzone 6, wobei die weitere dezentrale Steuereinheit 8 seriell zu der ersten dezentralen Steuereinheit 8 angeordnet ist,
- F:: (potentieller) Ausweichpfad (back up path), welcher im Bedarfsfall über ein dynamisches Routen in der Netzwerkstruktur aktiviert werden kann,
- G:: der bevorzugte, eingestellte direkte Pfad für die Energie-Leistungsversorgung und den Datenaustausch,
- H:: der zuvor erwähnte alternative Ausweichpfad, wenn er aktiviert ist und in der Routing-Tabelle entsprechend vorgesehen ist.

Ein beispielhafter Aufbau einer dezentralen Steuereinheit 8 und deren Anschluss einerseits an den Teil-Kabelsatz 10 sowie andererseits an den Versorgungsstrang 16 ist der FIG 2 zu entnehmen. Die dezentrale Steuereinheit 8 weist allgemein ein Gehäuse 18 auf, welches beispielsweise Befestigungslaschen zur Schraubbefestigungen an einen Trägerbauteil des Fahrzeugs 2 aufweist. Am Gehäuse 18 sind außenseitig mehrere Anschluss-Schnittstellen 20 ausgebildet, nämlich
- eine erste Anschluss-Schnittstelle 20A für den Anschluss an eine (einadrige) Stromleitung 22 des Versorgungsstrangs 16,
- eine zweite Anschluss-Schnittstelle 20B für den Anschluss an eine (zweiadrige) Datenleitung 24 des Versorgungsstrangs 16 sowie
- ein oder mehrere weitere Anschluss-Schnittstellen 20C für den Anschluss des Teil-Kabelsatzes 10.

Der Versorgungsstrang 16 weist allgemein die zumindest eine Stromleitung 22 sowie die zumindest eine Datenleitung 24 auf. Bei der Stromleitung 22 kann es sich um eine einadrige oder auch um eine zweiadrige Stromleitung handeln. Im Ausführungsbeispiel ist lediglich eine einadrige Stromleitung 22 vorgesehen. Bei einer zweiadriges Stromleitung 22 ist neben einer Versorgungsader mit positiven Bezugspotential auch noch eine Masseader mit Massepotenzial vorgesehen. Bei der Datenleitung 24 handelt es sich im Ausführungsbeispiel um ein insbesondere verdrilltes Adernpaar.

Die beiden Anschluss-Schnittstellen 20A sowie 20B zum Versorgungsstrang 16 sind im Ausführungsbeispiel der FIG 2 jeweils als Durchschleif-Schnittstellen ausgebildet, die also jeweils zweiteilig ausgebildet sind mit einem eingehenden Eingangs-Anschluss und einem ausgehenden Ausgangs-Anschluss jeweils für die Stromleitung 22 und für die Datenleitung 24. Bei der Anschluss-Schnittstelle 20A sind diese bevorzugt mit einem Kabelschuh und beispielsweise als Schraub-Anschlüsse ausgebildet. Die Anschluss-Schnittstelle 20B weist jeweils für einen eingehenden und einen ausgehenden Anschluss bevorzugt einen Kontaktstecker auf. Grundsätzlich können auch alternative Anschlussvarianten wie beispielsweise eine Direktkontaktierung vorgesehen sein.

Alternativ zu der in FIG 2 dargestellten Variante ist zum Anschluss der Stromleitung 22 und der Datenleitung 24 eine standardisierte, gemeinsame Schnittstelle, insbesondere über einen gemeinsamen Kontaktstecker ausgebildet (nicht dargestellt). Diese gemeineinsame Schnittstelle ist vorzugsweise bei allen dezentralen Steuereinheiten 8 - bis auf ggf. unterschiedliche Leiterquerschnitte - gleich.

Anhand der FIG 2 ist weiterhin zu erkennen, dass die dezentrale Steuereinheit 8 insgesamt lediglich eine (einzige) Anschluss-Schnittstelle 20 zum Anschluss des Versorgungsstrangs 16 aufweist, wobei diese Anschluss-Schnittstelle 20 im Ausführungsbeispiel als Durchschleif-Schnittstelle ausgebildet ist. Die dargestellte dezentrale Steuereinheit kann daher allenfalls mit zwei weiteren dezentralen Steuereinheiten 8 verbunden sein. Über die weitere Anschluss-Schnittstelle 20C sind Anschlussleitungen 26 des Teil-Kabelsatzes 10 angeschlossen. Hierbei handelt es sich einerseits um Strom-Anschlussleitungen sowie um Daten-Anschlussleitungen. Über erstere wird eine jeweilige elektrische Komponente 12 mit Strom und elektrischer Leistung versorgt und über letztere erfolgt eine datentechnische Anbindung und Ansteuerung. Für die weitere Anschluss-Schnittstelle 20C sind im Ausführungsbeispiel mehrere Kontaktstecker vorgesehen.

Für die jeweiligen Kontaktstecker sind am Gehäuse 18 entsprechende Kontaktbuchsen mit den geeigneten innenliegenden Kontakten außen am Gehäuse 18 ausgebildet. Die verschiedenen Anschlussleitungen 26 sind dabei je nach Anforderung unterschiedlich ausgebildet. Die verschiedenen Anschlussleitungen 26 bilden die einzelnen Leitungen des Teil-Kabelsatzes 10, über die die einzelnen elektrischen Komponenten 12 mit der dezentralen Steuereinheit 8 verbunden sind.

Im Inneren des Gehäuses 18 ist weiterhin eine lediglich schematisch angedeutete Recheneinheit 28 integriert, welche eine lokale Intelligenz für die dezentrale Steuereinheit 8 ausbildet, und die vielfältigen Funktionen ausführt, wie sie zuvor im einleitenden Beschreibungsteil beschrieben wurden. Im Innenraum des Gehäuses 18 erfolgt zudem eine geeignete Verdrahtung der Datenleitung 24 mit den mehreren Daten-Anschlussleitungen, wobei bevorzugt zu jeder der elektrischen Komponenten 12, die datentechnisch angebunden ist, jeweils eine eigene Daten-Anschlussleitung verlegt ist.

Weiterhin erfolgt eine geeignete Stromverteilung von der Stromleitung 22 des Versorgungsstrangs 16 auf die abgehenden Strom-Anschlussleitungen des Teil-Kabelsatzes 10. Im Innenraum sind hierzu nicht näher dargestellt Sicherungselemente, insbesondere elektronische Sicherungselemente angeordnet, die eine jeweilige abgehende Strom-Anschlussleitung gegenüber überhöhten Strömen und/oder Kurzschluss absichern.

Vorzugsweise kann eine elektronische Schaltung die Absicherung der Anschlussleitungen, die Verdrahtung/Verbindung der Datenleitungen sowie weitere Funktionen der Recheneinheit (28) integrieren.

Zudem kann es hinsichtlich Bauraum und Herstellungskosten vorteilhaft sein, wenn diese elektronische Schaltung ein integrierter Schaltkreis, insbesondere ein ASIC also eine anwendungsspezifische integrierte Schaltung (Application Specific Integrated Circuit) ist. Ein derartiger integrierter Schaltkreis bildet daher die Recheneinheit aus oder ist zumindest ein Teil der Recheneinheit.

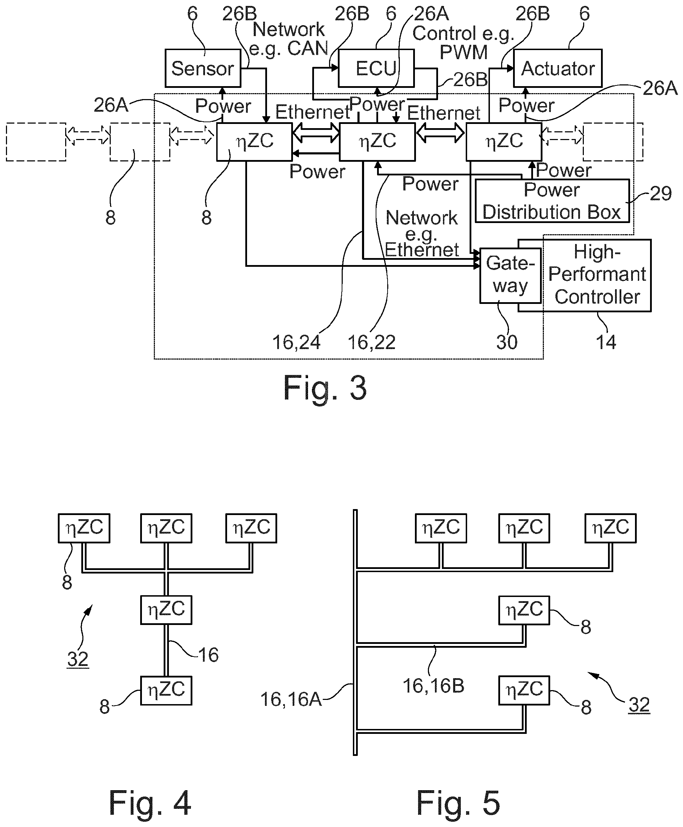

Die Stromleitung 22 des Versorgungsstrangs 16 ist mit einer Energiequelle und speziell mit einem zentralen Leistungsverteiler 29 (Verteilerbox, vergleiche hierzu insbesondere FIG 3), insbesondere einer (elektronischen) Haupt-Sicherungsbox verbunden. In dem Versorgungsstrangs 16 sind dabei vorzugsweise, jedoch nicht zwingend, mehrere Stromleitungen 22 integriert, die jeweils über eine individuelle (elektronische) Sicherung im Leistungsverteiler 29 an der Energiequelle angeschlossen sind.

FIG 3 zeigt ein vereinfachtes funktionelles Schaubild eines Ausschnitts des Bordnetzes 4 im Hinblick auf die datentechnische Verbindung als auch im Hinblick auf die Stromversorgung:
Als zentrale Versorgungseinheiten sind die bereits erwähnte zentrale Steuereinheit 14 (HPC, High Performant Controller) sowie der Leitungsverteiler 29 vorgesehen. Die zentrale Steuereinheit 14 steht über ein Gateway 30 funktional mit den individuellen dezentralen Steuereinheiten 8 in Kommunikationsverbindung. Dies erfolgt beispielsweise über einen öffentlichen Datenbus, beispielsweise einem Ethernet-Datenbus.

In der FIG 3 ist von den einzelnen dezentralen Steuereinheiten 8 dabei jeweils eine Kommunikationsverbindung zu dem Gateway 30 dargestellt. Hierbei handelt es sich jedoch in der Regel nicht um eine physikalische Einzelverdrahtung. Vielmehr erfolgt dies über eine Verdrahtung über den Versorgungsstrang 16 und einer Verdrahtungs-Topologie, wie sie beispielsweise nachfolgend zu den Figuren 4 und 5 erläutert wird.

Die einzelnen Bordnetz-Teilzonen 6 sind in FIG 3 jeweils vereinfacht durch einen Kasten dargestellt, welche unterschiedlich bezeichnet sind, und zwar im Ausführungsbeispiel mit Sensor, ECU sowie Aktuator. Mit diesen Bezeichnungen soll lediglich angedeutet werden, dass die entsprechenden Bordnetz-Teilzonen 6 derartige elektrische Komponenten 12 (unter anderem) aufweisen.

Eine jeweilige Bordnetz-Teilzone 6 ist jeweils über zumindest eine Strom-Anschlussleitung 26A (POWER) an der jeweiligen dezentralen Steuereinheit 8 angeschlossen und über diese mit der Stromleitung 22 des Versorgungsstrangs 16 verbunden.

Unabhängig von der teilweise lediglich funktionalen Darstellung gemäß der FIG 3 sind in physikalischer Hinsicht jeweils die Stromleitung 22 sowie die Datenleitung 24 parallel und nebeneinander zu einer jeweiligen dezentralen Steuereinheit 8 geführt. In Teilbereichen des Bordnetzes 4 kann hierbei vorgesehen sein, dass ausgehend von den zentralen Einheiten 14, 29 jeweils individuelle und damit mehrere Stromleitungen 22 sowie Datenleitungen 24 zu unterschiedlichen dezentralen Steuereinheiten 8 geführt werden.

Zumindest in einem Teilbereich des Bordnetzes 4 werden jedoch die Datenleitung 24 und die Stromleitungen 22 durch die einzelnen dezentralen Steuereinheiten 8 durchgeschleift.

Je nach Funktion und Art der integrierten elektrischen Komponenten 12 in einer jeweiligen Bordnetz-Teilzone 6 erfolgt eine geeignete Kommunikation und datentechnische Anbindung.

Die datentechnische Kommunikation mit einer jeweiligen Bordnetz-Teilzone 6 erfolgt über einen ersten Datenbus welcher ein Standard-Datenbus, beispielsweise ein CAN oder ein LIN -Datenbus ist. Die unterschiedlichen Bordnetz-Teilzonen 6 können dabei über unterschiedliche Datenbusse mit den dezentralen Steuereinheiten 8 kommunizieren.

Die unterschiedlichen Bezeichnungen Sensor, ECU, sowie Aktuator der jeweiligen Teilzonen 6 weisen auf unterschiedliche Arten von Kommunikationen hin: So erfolgt beispielsweise bei Sensoren lediglich eine Kommunikation und Datenübermittlung in Richtung zur dezentralen Steuereinheit 8. Bei einem Aktuator erfolgt lediglich die Übermittlung eines Steuersignals in einer Richtung zum Aktuator. Bei einer ECU erfolgt eine bidirektionale Kommunikation. Die Übermittlung von Steuersignalen geschieht beispielsweise durch pulsweiten-modulierte Signale. Da typischerweise eine jeweilige Bordnetz-Teilzone 6 unterschiedliche Arten von elektrischen Komponenten 12 aufweist, ist üblicherweise jeweils eine bidirektionale Kommunikation zwischen den Bordnetz, Teilzonen 6 und der dezentralen Steuereinheit 8 ausgebildet. Die Kommunikation erfolgt allgemein über Daten-Anschlussleitungen 26B.

Die Kombination der dezentralen Steuereinheiten 8 untereinander erfolgt über einen zweiten Datenbus, der insbesondere als proprietärer Datenbus ausgebildet ist und insbesondere getrennt und unabhängig von der Kommunikation mit den Bordnetz-Teilzonen 6 oder auch getrennt und unabhängig von der Kommunikation mit der zentralen Steuereinheit 14 ist. Die Kommunikation der dezentralen Steuereinheiten 8 untereinander erfolgt beispielsweise wiederum über Ethernet.

Insgesamt ist die dezentrale Steuereinheit 8 daher über einen geeigneten (zweiten) Datenbus zur Kommunikation untereinander sowie über geeignete (erste) Datenbusse zur Kommunikation einerseits mit den Bordnetz-Teilzonen 6 und den darin angeordneten elektrischen Komponenten 12 und andererseits zur Kommunikation mit der zentrale Steuereinheit 14 ausgebildet.

Die dezentralen Steuereinheiten 8 bilden zusammen mit der zentralen Steuereinheit 14 allgemein ein Kommunikationsnetz aus. Innerhalb dieses Kommunikationsnetzes ist regelmäßig die zentrale Steuereinheit 14 zugleich als ein Zeitmaster ausgebildet, welcher ein Zeitsignal (z.B. Clock-Signal, Zeitstempel) und damit eine Zeitbasis für die Teilnehmer des Kommunikationsnetzes vorgibt.

Hervorzuheben ist, dass bei Ausfall der zentralen Steuereinheit 14 oder bei einem Fehlen derselben, automatisch eine der dezentralen Steuereinheiten 8 die Funktion des Zeitmasters übernimmt und ein Zeitsignal und damit eine Zeitbasis bestimmt. Die übrigen Teilnehmer synchronisieren sich auf die neue Zeitbasis. Sobald sich die zentrale Steuereinheit 14 (wieder) zuschaltet übernimmt diese (wieder) die Funktion des Zeitmasters. Gleiches gilt, wenn die zentrale Steuereinheit 14 erstmals in das Kommunikationsnetz aufgenommen wird. Dies ist von besonderem Vorteil bei einer sequenziellen Montage der durch die Bordnetz-Teilzonen 6 und den angeschlossenen elektrischen Komponenten 6 gebildeten Vormontagebaugruppen. Dies ermöglicht, dass eine jeweilige dezentrale Steuereinheit 8 bereits in einem sehr frühen Montagestadium mit den restlichen Netzteilnehmern Kontakt aufnehmen kann und mit einer insbesondere automatischen Konfiguration begonnen werden kann.

Dieser Wechsel der Zeitmaster-Funktion zwischen der zentralen Steuereinheit 14 und einer der dezentralen Steuereinheiten 8 erfolgt dabei insbesondere ohne, dass das System neu gestartet werden muss.

Die einzelnen dezentralen Steuereinheiten 8 zusammen mit dem Versorgungsstrang 16 bilden jeweils eine Bordnetz-Stammbaugruppe 32, die in unterschiedlichen Topologie und ausschnittsweise in den Figuren 4 und 5 dargestellt ist. Die Bordnetz-Stammbaugruppe kann auch Mischformen der Topologien aufweisen. Bei der Bordnetz-Stammbaugruppe 32 handelt es sich insbesondere um eine vorgefertigte Baugruppe, die beispielsweise an einen Montageort für das Kraftfahrzeug geliefert wird. Bei der Endmontage des Kraftfahrzeugs wird diese Bordnetz- Stammbaugruppe 32 im Kraftfahrzeug montiert und bei der Montage der einzelnen Montage-Baugruppen mit den einzelnen Bordnetz-Teilzonen werden diese nachfolgend in einfacher Weise lediglich über die Verbindung des Teil-Kabelsatzes 10 mit der weiteren Anschluss-Schnittstelle 20C mit der jeweiligen dezentralen Steuereinheit 8 verbunden.

**FIG** 4 zeigt eine Kaskadierung der Topologie, bei der nachfolgend zu einer dezentralen Steuereinheit 8 eine Gruppe von weiteren dezentralen Steuereinheiten 8 seriell angeordnet ist, wobei sich im Ausführungsbeispiel der Versorgungsstrang 16 aufzweigt und die weiteren dezentralen Steuereinheiten 8 parallel zueinander angeordnet sind.

FIG 5 zeigt eine backbone-basierende Topologie, bei der der Versorgungsstrang 16 einen Hauptstrang 16A sowie von diesem abzweigende Abzweigsträngen 16B aufweist, wobei über jeden Abzweigstrang 16B eine Anzahl, also ein oder mehrere dezentrale Steuereinheiten 8 vorzugsweise parallel oder alternativ oder ergänzend auch seriell angeschlossen sind.

Wie insbesondere auch anhand der FIG 4 oder der FIG 5 zu erkennen ist, ist jeder einzelnen dezentralen Steuereinheit 8 maximal eine weiter vorgeschaltet oder nachgeschaltet. D.h. jede der dezentralen Steuereinheiten 8 ist maximal mit zwei weiteren dezentralen Steuereinheiten 8 verbunden. Hierzu ist der Versorgungsstrang 16 jeweils über eine Durchschleif-Schnittstelle angeschlossen. Einige der dezentralen Steuereinheiten 8 sind darüber hinaus als dezentrale End-Steuereinheiten 8 ausgebildet, bei denen der Versorgungsstrang 16 nicht durchgeschliffen wird und die daher lediglich einseitig am Versorgungsstrang 16 angeschlossen sind.

### Bezugszeichenliste

- 2: Fahrzeug
- 4: Bordnetz
- 6: Bordnetz-Teilzone
- 8: dezentrale Steuereinheit
- 10: Teil-Kabelsatz
- 12: elektrische Komponente
- 14: zentrale Steuereinheit
- 16: Versorgungsstrang
- 16A: Hauptstrang
- 16B: Abzweigstrang
- 18: Gehäuse
- 20: Anschluss-Schnittstelle
- 20A, B: erste, zweite Anschluss-Schnittstelle zum Versorgungsstrang 16
- 20C: weitere Anschluss-Schnittstelle zum Teil-Kabelsatz 10
- 22: Stromleitung
- 24: Datenleitung
- 26: Anschlussleitung
- 26A: Strom-Anschlussleitung
- 26B: Daten-Anschlussleitung
- 28: Recheneinheit
- 29: Leistungsverteiler
- 30: Gateway
- 32: Bordnetz-Stammbaugruppe

## Patentansprüche

1. Bordnetz (4) für ein Kraftfahrzeug, welches
- eine Vielzahl von Bordnetz-Teilzonen (6) aufweist, wobei
- jede Teilzone mehrere elektrische Komponenten (12) aufweist,
- jede Teilzone einen Teil-Kabelsatz (10) mit Anschlussleitungen (26) nämlich Strom-Anschlussleitungen (26A) sowie Daten-Anschlussleitungen (26B) aufweist, über die die elektrischen Komponenten (12) angeschlossen sind,
- einer jeden Teilzone eine dezentrale Steuereinheit (8) zugeordnet ist, die eine Schnittstelle zu der Bordnetz-Teilzone (6) definiert, über die die elektrische Leistungsversorgung als auch Datenversorgung der elektrischen Komponenten (12) erfolgt, und die dezentralen Steuereinheiten (8) hierzu
∘ an einem Versorgungsstrang (16) angeschlossen sind, welcher zumindest eine Stromleitung (22) für die elektrische Leistungsversorgung sowie zumindest eine Datenleitung (24) für die Datenübertragung aufweist,
∘ die dezentralen Steuereinheiten (8) jeweils eine Recheneinheit (28) aufweisen, welche zur Durchführung von folgenden Schritten ausgebildet ist:
▪ Kommunikation über die Daten-Anschlussleitungen (26B) mit den elektrischen Komponenten (12) mit Hilfe eines ersten Datenbusses,
▪ wobei für die Kommunikation der dezentralen Steuereinheiten (8) untereinander bevorzugt ein zweiter Datenbus verwendet wird,
▪ Kommunikation mit einer zentralen Steuereinheit (14) über den Versorgungsstrang (16),
▪ elektrische Absicherung der angeschlossenen Anschlussleitungen (26, 26A),
daduch gekennzeichnet, dass
- die zentrale Steuereinheit (14) als Zeitmaster zur Vorgabe eines Zeitsignals ausgebildet ist und wobei das Bordnetz dazu ausgebildet ist, dass im Falle eines Fehlens oder Ausfalls der zentralen Steuereinheit (14) eine der dezentralen Steuereinheiten (8) automatisch die Funktion des Zeitmasters übernimmt.

2. Bordnetz (4) nach dem vorhergehenden Anspruch, wobei jede der dezentralen Steuereinheiten (8) dafür eingerichtet ist, die Funktion des Zeitmasters temporär zu übernehmen, bis die Funktion des Zeitmasters von der zentralen Steuereinheit (14) übernommen wird.

3. Bordnetz (4) nach einem der vorhergehenden Ansprüche, bei dem bei einer Erstkonfiguration eine der dezentralen Steuereinheiten (8) die Zeitmaster-funktion übernimmt, bis sich die zentrale Steuereinheit (14) zugeschaltet hat.

4. Bordnetz (4) nach einem der vorhergehenden Ansprüche, wobei im Fehlerfall in einer Bordnetz-Teilzone (6) eine der dezentralen Steuereinheiten (8) für die Bordnetz-Teilzone (6) als Zeitmaster fungiert und einen Notbetrieb mit eingeschränktem Funktionsumfang aufrecht erhält.

5. Bordnetz (4) nach einem der vorhergehenden Ansprüche, das für eine sequentielle Montage der Bordnetz-Teilzonen (6) als Vormontagebaugruppen ausgebildet ist, wobei die dezentralen Steuereinheiten (8) dafür ausgelegt sind, bereits bei der sequentiellen Montage auch ohne der zentralen Steuereinheit (14) miteinander zu kommunizieren wobei hierzu eine Initiierung der Kommunikation auf Ebene einer solchen Vormontagebaugruppe durch eine dezentrale Steuereinheit (8) erfolgt.

6. Bordnetz (4) nach dem vorhergehenden Anspruch, wobei bereits im Laufe der sequentiellen Montage die einzelnen Teilnehmer eines Kommunikationsnetzwerkes sich sukzessive konfigurieren.

7. Bordnetz (4) nach einem der vorhergehenden Ansprüche, wobei der zweite Datenbus für die Kommunikation der dezentralen Steuereinheiten (8) untereinander verschieden zum ersten Datenbus ist.

8. Bordnetz (4) nach dem vorhergehenden Anspruch, wobei der zweite Datenbus als ein proprietärer Datenbus ausgebildet ist.

9. Bordnetz (4) nach einem der beiden vorhergehenden Ansprüche, wobei die jeweilige dezentrale Steuereinheit (8) für eine wechselseitige Umwandlung der Datenprotokolle der beiden Datenbusse für eine bidirektionale Kommunikation von / zu den elektrischen Komponenten (12) ausgebildet ist.

10. Bordnetz (4) nach einem der vorhergehenden Ansprüche, wobei an einer der dezentralen Steuereinheiten (8) mehrere Sub-Teilkabelsätze angeschlossen sind, wobei die Sub-Teilkabelsätze untereinander nicht verbunden sind und räumlich in unterschiedlichen Sub-Teilzonen verlegt sind.

11. Bordnetz (4) nach einem der vorhergehenden Ansprüche, das zumindest einen zentralen Leistungsverteiler (29) sowie die zumindest eine zentrale Steuereinheit (14) aufweist, mit denen der Versorgungsstrang (16) jeweils verbunden ist.

12. Bordnetz (4) nach dem vorhergehenden Anspruch, wobei die zentrale Steuereinheit (14) in einer Bordnetz-Teilzone (6) angeordnet ist und über eine dieser Bordnetz-Teilzone (6) zugeordneten dezentralen Steuereinheit (8) an den Versorgungsstrang (16) angeschlossen ist

13. Bordnetz (4) nach einem der vorhergehenden Ansprüche, wobei die Stromleitung (22) und die Datenleitung (24) des Versorgungsstrangs (16) durch zumindest einige der dezentralen Steuereinheiten (8) durchgeschleift werden und die dezentralen Steuereinheiten (8) hierzu jeweils einen Eingangs-Anschluss sowie einen Ausgangs-Anschluss für die Stromleitung (22) und / oder die Datenleitung (24) aufweisen, wobei in bevorzugter Ausgestaltung zumindest einige und vorzugsweise alle der dezentralen Steuereinheiten (8) genau eine Anschluss-Schnittstelle zum Anschluss des Versorgungsstrangs aufweisen, die bei Bedarf ergänzend als eine Durchschleif-Schnittstelle ausgebildet ist.

14. Bordnetz (4) nach einem der vorhergehenden Ansprüche, wobei die einzelnen dezentralen Steuereinheiten (8) zusammen mit dem Versorgungsstrang (16) eine vorgefertigte Bordnetz- Stammbaugruppe (32) bilden, an der die individuellen Teil-Kabelsätze (10) an den jeweiligen dezentralen Steuereinheiten (8) angeschlossen sind.

15. Bordnetz (4) nach einem der vorhergehenden Ansprüche, wobei zumindest einige und vorzugsweise alle Bordnetz-Teilzonen (6) jeweils Teil einer vorkonfektionierten Baugruppe sind, die ein mechanisches Fahrzeugmodul sowie die jeweilige integrierte Bordnetz-Teilzone (6) umfassend die mehreren elektrischen Komponenten (12) aufweist, die über den Teil-Kabelsatz (10) an der dezentralen Steuereinheit (8) angeschlossen sind.

## Claims

1. On-board electrical system (4) for a motor vehicle, which
- has a large number of on-board network subzones (6), wherein
- each subzone has several electrical components (12),
- each subzone has a cable subset (10) with connection cables (26), namely power connection cables (26A) and data connection cables (26B), via which the electrical components (12) are connected,
- each subzone is assigned a decentralized control unit (8) which defines an interface to the on-board network subzone (6) via which the electrical power supply as well as the data supply of the electrical components (12) is provided, and, for this purpose, the decentralized control units (8) are
∘ connected to a supply cord (16) which has at least one power line (22) for the electrical power supply and at least one data line (24) for data transmission,
∘ the decentralized control units (8) each have a processing unit (28) which is configured to carry out the following steps:
▪ communication via the data connection lines (26B) with the electrical components (12) using a first data bus,
▪ wherein a second data bus is preferably used for communication between the decentralized control units (8),
▪ communication with a central control unit (14) via the supply cord (16),
▪ electrical protection of the connected connection lines (26, 26A),
**characterized in that**
- the central control unit (14) is configured as time master for specifying a time signal, and wherein on-board network is configured such that, in the event of a lack or failure of the central control unit (14), one of the decentralized control units (8) automatically takes over the function of the time master.

2. The on-board network (4) according to the preceding claim, wherein each of the decentralized control units (8) is configured to temporarily take over the function of the time master, until the function of the time master is taken over by the central control unit (14).

3. The on-board network (4) according to any one of the preceding claims, wherein, in an initial configuration, one of the decentral control units (8) takes over the function of time master, until the central control unit (14) is switched on.

4. The on-board network (4) according to any one of the preceding claims, wherein, in case of a failure in an on-board network subzone (6), one of the decentral control units (8) for the on-board network subzone (6) acts as time master and maintains an emergency operation with a limited range of functions.

5. The on-board network (4) according to any one of the preceding claims, which is configured for sequential assembly of the on-board network subzones (6) as pre-assembly modules, wherein the decentralized control units (8) are configured, even during the sequential assembly, to also communicate with each other without the central control unit (14), wherein, to this end, an initiation of the communication on the level of such a pre-assembly module takes place by a decentralized control unit (8).

6. The on-board network (4) according to the preceding claim, wherein already during the sequential assembly, the individual participants of a communication network are successively being configured.

7. The on-board network (4) according to any one of the preceding claims, wherein the second data bus for the communication of the decentralized control units (8) among each other is different from the first data bus.

8. The on-board network (4) according to the preceding claim, wherein the second data bus is configured as a proprietary data bus.

9. The on-board network (4) according to any one of both preceding claims, wherein the respective decentralized control unit (8) is configured for a reciprocal conversion of the the data protocols of both data buses for a bidirectional communication to/from the electrical components (12).

10. The on-board network (4) according to any one of the preceding claims, wherein several cable subsets are connected to one of the decentralized control units (8), wherein the cable subsets are not connected to each other and are spatially laid in different subzones.

11. The on-board network (4) according to any one of the preceding claims, which has at least one central power distributor (29) and at least one central control unit (14) to each of which the supply cord (16) is connected.

12. The on-board network (4) according to the preceding claim, wherein the central control unit (14) is arranged in an on-board network subzone (6) and is connected to the supply cord (16) via a decentralized control unit (8), assigned to this on-board network subzone (6).

13. The on-board network (4) according to any one of the preceding claims, wherein the power line (22) and the data line (24) of the supply cord (16) are looped through at least some of the decentralized control units (8) and the decentralized control units (8) each have an input connection and an output connection for the power line (22) and/or the data line (24), wherein, in a preferred embodiment, at least some and preferably all of the decentralized control units (8) have exactly one connection interface for connecting the supply cord, which is additionally configured as a loop-through interface, if required.

14. The on-board network (4) according to any one of the preceding claims, wherein the individual decentralized control units (8), together with the supply cord (16), form a prefabricated on-board main module (32), to which the individual cable subsets (10) are connected to the respective decentralized control units (8).

15. The on-board network (4) according to any one of the preceding claims, wherein at least some and preferably all on-board network subzones (6) are each part of a pre-assembled module having a mechanical vehicle module and the respective integrated on-board network subzone (6), comprising the several electrical components (12) which are connected to the decentralized control unit (8) via the cable subset (10).

## Revendications

1. Système électrique embarqué (4) de véhicule automobile, qui comporte
- une pluralité de zones partielles (6) de système électrique embarqué,
- chaque zone partielle comportant plusieurs composants électriques (12),
- chaque zone partielle comportant un faisceau partiel (10) de câbles avec des lignes de raccordement (26), à savoir des lignes de raccordement de courant (26A) ainsi que des lignes de raccordement de données (26B), par l'intermédiaire desquelles sont raccordés les composants électriques (12),
- à chaque zone partielle étant affectée une unité de commande décentralisée (8) qui définit une interface avec la zone partielle (6) de système électrique embarqué, par l'intermédiaire de laquelle s'effectuent l'alimentation en énergie électrique ainsi que l'alimentation en données des composants électriques (12), et à cette fin les unités de commande décentralisées (8)
∘ sont raccordées à une branche d'alimentation (16) qui comporte au moins un conducteur de courant (22) pour l'alimentation en énergie électrique ainsi qu'au moins un conducteur de données (24) pour la transmission de données,
∘ les unités de commande décentralisées (8) comportent chacune une unité de calcul (28) qui est configurée pour l'exécution des étapes suivantes :
▪ communication par l'intermédiaire des lignes de raccordement de données (26B) avec les composants électriques (12) à l'aide d'un premier bus de données,
▪ pour la communication des unités de commande décentralisées (8) entre elles, de préférence un deuxième bus de données étant utilisé,
▪ communication avec une unité de commande centrale (14) par l'intermédiaire de la branche d'alimentation (16),
▪ protection électrique des lignes de raccordement (26, 26A) raccordées,
**caractérisé en ce que**
- l'unité de commande centrale (14) est configurée en tant que maître de synchronisation pour la fourniture d'un signal temporel et le système électrique embarqué étant configuré de façon telle que dans le cas d'une défaillance ou d'un non fonctionnement de l'unité de commande centrale (14), l'une des unités de commande décentralisées (8) assume automatiquement la fonction du maître de synchronisation.

2. Système électrique embarqué (4) selon la revendication précédente, dans lequel chacune des unités de commande décentralisées (8) est conçue pour assumer temporairement la fonction du maître de synchronisation jusqu'à ce que la fonction du maître de synchronisation soit assumée par l'unité de commande centrale (14).

3. Système électrique embarqué (4) selon l'une quelconque des revendications précédentes, dans lequel, dans une configuration initiale, l'une des unités de commande décentralisées (8) assume la fonction de maître de synchronisation jusqu'à ce que l'unité de commande centrale (14) se soit mise en circuit.

4. Système électrique embarqué (4) selon l'une quelconque des revendications précédentes, dans lequel en cas de défaillance dans une zone partielle (6) de système électrique embarqué, l'une des unités de commande décentralisées (8) pour la zone partielle (6) de système électrique embarqué fonctionne en tant que maître de synchronisation et maintient un fonctionnement d'urgence à ensemble de fonctions limité.

5. Système électrique embarqué (4) selon l'une quelconque des revendications précédentes, qui est configuré pour un montage séquentiel des zones partielles (6) de système électrique embarqué, en tant que modules de prémontage, les unités de commande décentralisées (8) étant conçues pour communiquer entre elles déjà lors du montage séquentiel, même sans l'unité de commande centrale (14), une initialisation de la communication sur le plan d'un tel module de prémontage s'effectuant à cette fin par une unité de commande décentralisée (8).

6. Système électrique embarqué (4) selon la revendication précédente, dans lequel les participants individuels d'un réseau de communication se configurent successivement au cours du montage séquentiel.

7. Système électrique embarqué (4) selon l'une quelconque des revendications précédentes, dans lequel le deuxième bus de données pour la communication des unités de commande décentralisées (8) entre elles est différent du premier bus de données.

8. Système électrique embarqué (4) selon la revendication précédente, dans lequel le deuxième bus de données est configuré comme un bus de données propriétaire.

9. Système électrique embarqué (4) selon l'une quelconque des deux revendications précédentes, dans lequel l'unité de commande décentralisée respective (8) est configurée pour une conversion réciproque des protocoles de données des deux bus de données pour une communication bidirectionnelle depuis/vers les composants électriques (12).

10. Système électrique embarqué (4) selon l'une quelconque des revendications précédentes, dans lequel à l'une des unités de commande décentralisées (8) sont raccordés plusieurs sous-faisceaux partiels de câbles, les sous-faisceaux partiels de câbles n'étant pas reliés entre eux et étant situés dans l'espace dans différentes sous-zones partielles.

11. Système électrique embarqué (4) selon l'une quelconque des revendications précédentes, qui comporte au moins un distributeur central de puissance (29) ainsi que ladite au moins une unité de commande centrale (14), à chacun desquels est raccordée la branche d'alimentation (16).

12. Système électrique embarqué (4) selon la revendication précédente, dans lequel l'unité de commande centrale (14) est disposée dans une zone partielle (6) de système électrique embarqué et est raccordée à la branche d'alimentation (16) par l'intermédiaire d'une unité de commande décentralisée (8) affectée à cette zone partielle (6) de système électrique embarqué.

13. Système électrique embarqué (4) selon l'une quelconque des revendications précédentes, dans lequel le conducteur de courant (22) et le conducteur de données (24) de la branche d'alimentation (16) sont acheminés à travers au moins certaines des unités de commande décentralisées (8) et les unités de commande décentralisées (8) comportent à cet effet chacune un raccordement d'entrée ainsi qu'un raccordement de sortie pour le conducteur de courant (22) et/ou le conducteur de données (24), dans une configuration préférée, au moins certaines et de préférence la totalité des unités de commande décentralisées (8) comportant exactement une interface de connexion destinée au raccordement de la branche d'alimentation, qui peut, si nécessaire, également être configurée comme une interface de relais.

14. Système électrique embarqué (4) selon l'une quelconque des revendications précédentes, dans lequel les unités de commande décentralisées (8) individuelles forment, conjointement avec la branche d'alimentation (16), un module de base préfabriqué (32) de système électrique embarqué, au niveau duquel les faisceaux partiels (10) individuels de câbles sont raccordés aux unités de commande décentralisées (8) respectives.

15. Système électrique embarqué (4) selon l'une quelconque des revendications précédentes, dans lequel au moins certaines, et de préférence la totalité des zones partielles (6) de système électrique embarqué font partie chacune d'un module préassemblé qui comprend un module mécanique de véhicule ainsi que la zone partielle (6) intégrée respective de système électrique embarqué, comprenant les multiples composants électriques (12) qui sont raccordés à l'unité de commande décentralisée (8) par l'intermédiaire du faisceau de câbles partiel (10).
